# EUROPEAN PATENT SPECIFICATION

(11) **EP 4 299 992 B1**
(45) Date of publication and mention of the grant of the patent: **22.04.2026**
(21) Application number: 23182912.8
(22) Date of filing: 30.06.2023
(51) Int. Cl.: F24F 5/00, F24F 11/65, F24D 19/10, F24D 5/12, F24D 17/02, F24H 15/227, F24H 15/254, F24H 15/258, F24H 15/429, F25B 13/00, F24F 140/20, F25B 47/02, F25B 49/02, F24F 110/10, F24F 110/12, F24F 110/20

(54) **HEAT RECOVERY MULTI-SPLIT AIR CONDITIONING SYSTEM AND OPERATION METHOD THEREFOR**
MULTISPLIT-KLIMAANLAGE MIT WÄRMERÜCKGEWINNUNG UND BETRIEBSVERFAHREN DAFÜR
SYSTÈME DE CLIMATISATION À RÉCUPÉRATION DE CHALEUR À DIVISIONS MULTIPLES ET SON PROCÉDÉ DE FONCTIONNEMENT

(30) Priority: 01.07.2022 CN 202210775214
(43) Date of publication of application: 03.01.2024
(73) Proprietor: Guangdong Carrier HVAC Co., Ltd., Foshan, Guangdong 528244 (CN)
(72) Inventor: Xiaolou, Yan, Foshan, Guangdong 528244 (CN); Liuhao, Yan, Foshan, Guangdong 528244 (CN); Huandi, Yang, Foshan, Guangdong 528244 (CN); Wanrong, Zhang, Foshan, Guangdong 528244 (CN)
(74) Representative: Dehns

(56) References cited:
- EP-A1- 2 233 864
- EP-A1- 3 859 238
- CN-B- 102 679 482
- GB-A- 2 537 453
- US-A1- 2022 090 803

## Description

### Technical Field

The present invention relates to the field of air conditioners, and specifically to a heat recovery multi-split system and an operation method therefor.

### Background

The heat recovery system has a very high efficiency of hot water production during operation, which continuously heats the hydraulic module. However, there also exists the following problem: when the outdoor unit defrosts, since the low pressure of the indoor unit is very low, a very low temperature will lead to a long defrosting time and incomplete defrosting of the outdoor unit.

Under the condition of low temperatures, after running the hot water production and domestic hot water, defrosting is carried out with the indoor unit of the air conditioner. In the defrosting process, little heat is absorbed, while in the defrosting process, the low pressure is low, and then the high pressure is also low, so the defrosting process of the outdoor unit takes a long time, and the defrosting is not complete, and the fins of the indoor unit freeze after the defrosting, which is the result of the defrosting for the first time. If the system operates continuously, the indoor unit will freeze more and more seriously, thus affecting the heating effect of the air-conditioner; whereas if the indoor unit is preheated all the time, a lot of refrigerant will flow to the indoor unit, then less refrigerant will flow to the hydraulic module, resulting in a poor effect of hot water production and a high temperature of the exhaust.

CN 102679482 B discloses a heat recovery multi-split system which includes multiple temperature sensors, including for detecting outer ambient temperature, indoor ambient temperature and indoor coil temperature, and a controller for comparative analysis and control.

### Summary of the Invention

In view of the above problems, embodiments of the present invention provide a heat recovery multi-split system and an operation method therefor, which can take into account the heating speed and defrosting effect by combining the system operation mode, the indoor and outdoor ambient temperatures, and the indoor unit coil temperature to determine whether to send a heating energy demand.

Viewed from one aspect, the present invention provides a heat recovery multi-split system, comprising an indoor unit, an outdoor unit, and a hydraulic module, and further comprises: a temperature acquisition module that acquires an indoor ambient temperature, an outdoor ambient temperature, and an indoor unit coil temperature; a detection module that detects an operation mode in which the heat recovery multi-split system is in, the operation mode comprising a hot water production mode and a normal operation mode; and a determination module, wherein when the heat recovery multi-split system is in the hot water production mode, and after defrosting and oil return are completed, the determination module determines whether to send a heating energy demand according to the result of comparing the outdoor ambient temperature with an outdoor temperature preset value and/or the result of comparing the indoor unit coil temperature with an indoor unit coil temperature preset value; and when the heat recovery multi-split system is in a normal operation process and a hot water production demand is received, the determination module determines whether to send the heating energy demand according to the result of comparing the indoor ambient temperature with an indoor temperature preset value and/or the result of comparing the indoor unit coil temperature with an indoor unit coil temperature preset value.

According to this technical solution, in the hot water production mode, after defrosting and oil return are completed, the indoor unit coil temperature reaches the lowest, and in combination with the indoor unit coil temperature, after the outdoor unit is defrosted, the heating energy demand is sent on demand to defrost the indoor unit, which overcomes the problem that the indoor unit will freeze more and more seriously and improves the defrosting effect; and in combination with the indoor unit coil temperature, an intelligent determination of whether to preheat the indoor unit is made, which can take into account the heating effect of the indoor unit and the effect of hot water production, without wasting the energy of the system. In the normal operation mode, it is determined according to the indoor ambient temperature and the indoor unit coil temperature whether to send the heating energy demand, which is conducive to reducing energy consumption while taking into account the heating effect of the indoor unit and the effect of hot water production.

In an optional technical solution of the present invention, when the outdoor ambient temperature is not less than the outdoor temperature preset value, the heating energy demand is not sent; and when the outdoor ambient temperature is less than the outdoor temperature preset value, it is determined according to the indoor unit coil temperature whether to send the heating energy demand.

According to this technical solution, when the outdoor ambient temperature is not less than the outdoor temperature preset value, the indoor unit will not frost in a high probability, so the heating energy demand is not sent, which is conducive to reducing the energy consumption of the system; when the outdoor ambient temperature is less than the outdoor temperature preset value, it is further determined according to the indoor unit coil temperature whether to send the heating energy demand, so that the heating energy demand can be sent on demand to preheat the indoor unit coil, so as to keep the indoor unit coil temperature within the specified range, thus ensuring the effect of hot water production. After running the hot water production, the indoor unit coil temperature in the specified range can ensure the temperature rise speed of the indoor unit and improve the rapid heating capacity of the indoor unit, and when the indoor unit is being defrosted, the appropriate temperature rise speed of the indoor unit is conducive to improving the defrosting efficiency, shortening the defrosting time, and improving the defrosting effect.

In an optional technical solution of the present invention, when the indoor ambient temperature is not less than a first indoor temperature preset value, the heating energy demand is not sent; when the indoor ambient temperature is in a specified temperature range, it is determined according to the indoor unit coil temperature whether to send the heating energy demand; and when the indoor ambient temperature is less than a second temperature preset value, the heating energy demand is sent once every specified time interval.

According to this technical solution, when the indoor ambient temperature is not less than the first indoor temperature preset value, the indoor unit will not frost in a high probability, so the heating energy demand will not be sent, which is conducive to reducing the energy consumption of the system; when the indoor ambient temperature is in the specified temperature range, in combination with the indoor unit coil temperature, it is determined whether to send the heating energy demand, which improves the control accuracy of sending the heating energy demand and the accuracy of intervention in frosting of the indoor unit, realizes preheating of the indoor unit on demand, and saves the energy consumption of the system; and when the indoor ambient temperature is less than the second temperature preset value, the indoor unit has a high probability of frosting, so the heating energy demand is sent once every specified time interval, thus allowing intervention in the indoor unit in time after frost formation so as to improve the defrosting effect.

In an optional technical solution of the present invention, when the indoor unit coil temperature is lower than the indoor unit coil temperature preset value, the heating energy demand is sent; and when the indoor unit coil temperature is greater than the indoor unit coil temperature preset value, the heating energy demand is not sent.

According to the technical solution, when the indoor unit coil temperature is higher than the indoor unit coil temperature preset value, the temperature rise of the indoor unit is quick, and the system will quickly break through the anti-cold air restriction and blow hot air when heating, so that the rapid heating can be carried out without sending a heating energy demand, which is conducive to reducing the energy consumption of the system; and when the indoor unit coil temperature is lower than the indoor unit coil temperature preset value, the temperature rise of the indoor unit is slow, and the heating energy demand is sent, which is conducive to improving the heating efficiency.

In an optional technical solution of the present invention, the indoor unit comprises a plurality of sub-indoor units arranged in parallel and indoor fans corresponding to the sub-indoor units, inlets of the sub-indoor units being separately connected in series with electronic expansion valves; the heat recovery multi-split system further comprises a control module, wherein the control module controls the electronic expansion valve corresponding to the sub-indoor unit that receives a heating demand to open to a specified opening degree and the corresponding indoor fan to close; and controls the electronic expansion valve corresponding to the sub-indoor unit that does not receive the heating demand to close and the corresponding indoor fan to close; and controls to turn off the outdoor unit when all the sub-indoor units do not receive the heating demand; and controls to turn on the outdoor unit when any of the sub-indoor units receives the heating demand.

According to this technical solution, when a sub-indoor unit receives a heating demand, correspondingly, the indoor fan is closed and the electronic expansion valve is opened, which is conducive to improving the efficiency of heating, and at the same time, the outdoor unit is turned on to ensure the normal operation of the system; and when none of the sub-indoor units receives a heating demand, the outdoor unit is turned off to reduce the energy consumption of the system.

Viewed from another aspect, the present invention provides an operation method for a heat recovery multi-split system, the heat recovery multi-split system comprising an indoor unit, an outdoor unit, and a hydraulic module, wherein the operation method for a heat recovery multi-split system comprises the steps of: acquiring an indoor ambient temperature, an outdoor ambient temperature, and an indoor unit coil temperature; detecting an operation mode in which the heat recovery multi-split system is in, the operation mode comprising a hot water production mode and a normal operation mode; and when the heat recovery multi-split system is in the hot water production mode, and after defrosting and oil return are completed, determining whether to send a heating energy demand according to the result of comparing the outdoor ambient temperature with an outdoor temperature preset value and/or the result of comparing the indoor unit coil temperature with an indoor unit coil temperature preset value; and when the heat recovery multi-split system is in a normal operation process and a hot water production demand is received, determining whether to send the heating energy demand according to the result of comparing the indoor ambient temperature with an indoor temperature preset value and/or the result of comparing the indoor unit coil temperature with an indoor unit coil temperature preset value.

In an optional technical solution of the present invention, when the outdoor ambient temperature is not less than the outdoor temperature preset value, the heating energy demand is not sent; and when the outdoor ambient temperature is less than the outdoor temperature preset value, it is determined according to the indoor unit coil temperature whether to send the heating energy demand.

In an optional technical solution of the present invention, when the indoor ambient temperature is not less than a first indoor temperature preset value, the heating energy demand is not sent; when the indoor ambient temperature is in a specified temperature range, it is determined according to the indoor unit coil temperature whether to send the heating energy demand; and when the indoor ambient temperature is less than a second temperature preset value, the heating energy demand is sent once every specified time interval.

In an optional technical solution of the present invention, the step of determining whether to send the heating energy demand according to the indoor unit coil temperature comprises:
when the indoor unit coil temperature is lower than the indoor unit coil temperature preset value, sending the heating energy demand; and when the indoor unit coil temperature is greater than the indoor unit coil temperature preset value, not sending the heating energy demand.

In an optional technical solution of the present invention, the indoor unit comprises a plurality of sub-indoor units arranged in parallel and indoor fans corresponding to the sub-indoor units, inlets of the sub-indoor units being separately connected in series with electronic expansion valves;
the heat recovery multi-split system further comprises a control module, wherein the control module controls the electronic expansion valve corresponding to the sub-indoor unit that receives a heating demand to open to a specified opening degree and the corresponding indoor fan to close; and controls the electronic expansion valve corresponding to the sub-indoor unit that does not receive the heating demand to close and the corresponding indoor fan to close; and controls to turn off the outdoor unit when all the sub-indoor units do not receive the heating demand; and controls to turn on the outdoor unit when any of the sub-indoor units receives the heating demand.

### Brief Description of Drawings

Embodiments of the invention will now be described, by way of example only, with reference to the accompanying drawings, wherein:
FIG. 1 is a schematic diagram of the structure of a heat recovery multi-split system in an embodiment of the present invention.
FIG. 2 is a schematic diagram of the modular structure of a heat recovery multi-split system in an embodiment of the present invention.
FIG. 3 is a schematic flowchart of an operation method for a heat recovery multi-split system in an embodiment of the present invention.
FIG. 4 is a schematic flowchart of the determination of the operation method for a heat recovery multi-split system in an embodiment of the present invention;
FIG. 5 is another schematic flowchart related to an operation method.

### Reference numerals:

Indoor unit 1; sub-indoor unit 11; outdoor unit 2; compressor 21; first four-way valve 22; second four-way valve 23; outdoor heat exchanger 24; outdoor fan 25; subcooler 26; gas-liquid separator 27; one-way valve 281; one-way valve 282; one-way valve 283; hydraulic module 3; heat exchange water tank 31; throttling component EXV1; throttling component EXV2; throttling component EXV3; temperature acquisition module 4; detection module 5; determination module 6; control module 7; indoor ambient temperature T1; and indoor unit coil temperature T2.

### Detailed Description

Technical solutions in the embodiments of the present invention described by way of example will be clearly and completely described below in conjunction with the accompanying drawings. It is apparent that the described embodiments are only by way of example of the embodiments of the present invention rather than all of them. Based on the illustrative embodiments of the present invention, all other embodiments obtained by a person of ordinary skill in the art without making creative labor fall within the scope of protection of the present invention.

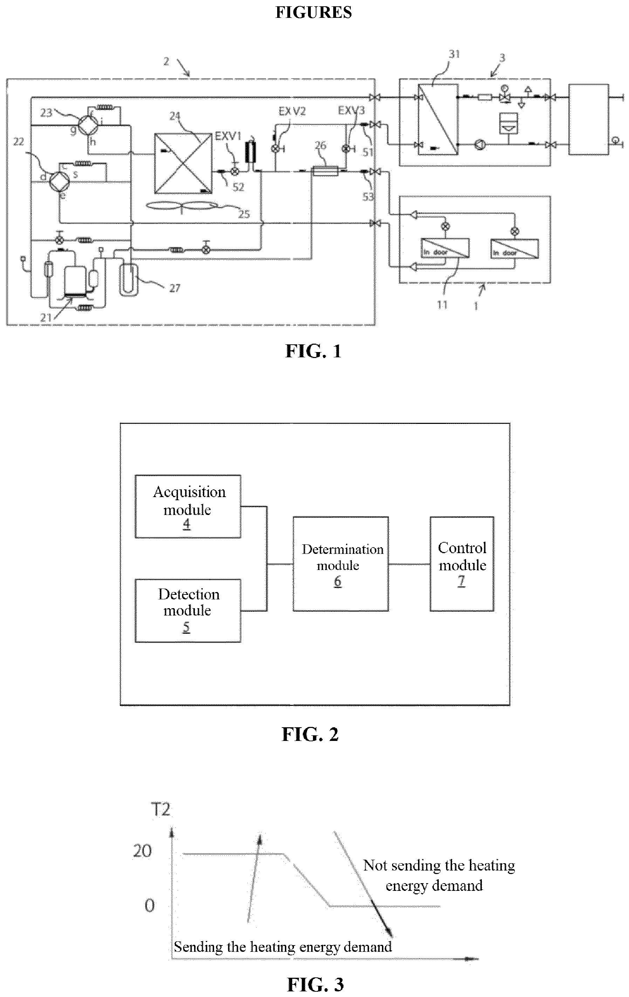

Referring to FIGS. 1 and 2, the present invention provides a heat recovery multi-split system, comprising an indoor unit 1, an outdoor unit 2, and a hydraulic module 3, and further comprises: a temperature acquisition module 4 that acquires an indoor ambient temperature T1, an outdoor ambient temperature, and an indoor unit coil temperature T2; a detection module 5 that detects an operation mode in which the heat recovery multi-split system is in, the operation mode comprising a hot water production mode and a normal operation mode; and a determination module 6, wherein when the heat recovery multi-split system is in the hot water production mode, and after defrosting and oil return are completed, the determination module 6 determines whether to send a heating energy demand according to the result of comparing the outdoor ambient temperature with an outdoor temperature preset value and/or the result of comparing the indoor unit coil temperature T2 with an indoor unit coil temperature preset value; and when the heat recovery multi-split system is in a normal operation process and a hot water production demand is received, the determination module 6 determines whether to send the heating energy demand according to the result of comparing the indoor ambient temperature T1 with an indoor temperature preset value and/or the result of comparing the indoor unit coil temperature T2 with an indoor unit coil temperature preset value.

In the above manner, in the hot water production mode, after defrosting and oil return are completed, the indoor unit coil temperature T2 reaches the lowest, and in combination with the indoor unit coil temperature T2, after the outdoor unit 2 is defrosted, the heating energy demand is sent on demand to defrost the indoor unit 1, which overcomes the problem that the indoor unit 1 will freeze more and more seriously and improves the defrosting effect; and in combination with the indoor unit coil temperature T2, an intelligent determination of whether to preheat the indoor unit 1 is made, which can take into account the heating effect of the indoor unit 1 and the effect of hot water production, without wasting the energy of the system. In the normal operation mode, it is determined according to the indoor ambient temperature T1 and the indoor unit coil temperature T2 whether to send the heating energy demand, which is conducive to reducing energy consumption while taking into account the heating effect of the indoor unit 1 and the effect of hot water production.

In a preferred implementation of the present invention, the indoor unit 1 comprises a plurality of sub-indoor units 11 arranged in parallel and indoor fans (not shown in the figure) corresponding to the sub-indoor units 11, inlets of the sub-indoor units 11 being separately connected in series with electronic expansion valves 12.

The outdoor unit 2 comprises a compressor 21, a first four-way valve 22, a second four-way valve 23, a plurality of throttling components (EXV1, EXV2, EXV3), an outdoor heat exchanger 24, an outdoor fan 25, a subcooler 26, a gas-liquid separator 27, and one-way valves (281, 282, 283), and the hydraulic module 3 comprises a heat exchange water tank 31 and a refrigerant flow path.

The temperature acquisition module 4 is a temperature sensor for separately detecting an indoor ambient temperature T1, an outdoor ambient temperature, and an indoor unit coil temperature T2.

In the implementation of the present invention, the heating energy demand can be an energy demand value or a heating energy demand signal; and the normal operation mode is usually a cooling mode or a heating mode.

In the preferred implementation of the present invention, in the hot water production mode, when the outdoor ambient temperature is not less than the outdoor temperature preset value, the heating energy demand is not sent; and when the outdoor ambient temperature is less than the outdoor temperature preset value, it is determined according to the indoor unit coil temperature T2 whether to send the heating energy demand.

In the above manner, when the outdoor ambient temperature is not less than the outdoor temperature preset value, the indoor unit will not frost in a high probability, so the heating energy demand is not sent, which is conducive to reducing the energy consumption of the system; when the outdoor ambient temperature is less than the outdoor temperature preset value, it is further determined according to the indoor unit coil temperature T2 whether to send the heating energy demand, so that the heating energy demand can be sent on demand to preheat the indoor unit coil, so as to keep the indoor unit coil temperature T2 within the specified range, thus ensuring the effect of hot water production. After running the hot water production, the indoor unit coil temperature T2 in the specified range can ensure the temperature rise speed of the indoor unit and improve the rapid heating capacity of the indoor unit 1, and when defrosting the indoor unit, the appropriate temperature rise speed of the indoor unit is conducive to improving the defrosting efficiency, shortening the defrosting time, and improving the defrosting effect.

Further, as shown in FIG. 3, when the outdoor ambient temperature T1 is less than the outdoor temperature preset value, the step of determining according to the indoor unit coil temperature T2 whether to send the heating energy demand comprises:
when the indoor unit coil temperature T2 is lower than the indoor unit coil temperature preset value (e.g., 20°C), sending the heating energy demand; and
when the indoor unit coil temperature T2 is greater than the indoor unit coil temperature preset value, not sending the heating energy demand.

In the above manner, when the indoor unit coil temperature T2 is higher than the indoor unit coil temperature preset value, the temperature rise of the indoor unit is quick, and the system will quickly break through the anti-cold air restriction and blow hot air when heating, so that the rapid heating can be carried out without sending a heating energy demand, which is conducive to reducing the energy consumption of the system; and when the indoor unit coil temperature T2 is lower than the indoor unit coil temperature preset value, the temperature rise of the indoor unit 1 is slow, and the heating energy demand is sent, which is conducive to improving the heating efficiency.

Even further, the heat recovery multi-split system further comprises a control module 7, wherein the control module 7 controls the opening and closing of the electronic expansion valve 12, the indoor fan, and the outdoor unit 2. Specifically, the control module 7 controls the electronic expansion valve 12 corresponding to the sub-indoor unit 11 that receives a heating demand to open to a specified opening degree and the corresponding indoor fan to close; and controls the electronic expansion valve 12 corresponding to the sub-indoor unit 11 that does not receive the heating demand to close and the corresponding indoor fan to close; and controls to turn off the outdoor unit 2 when all the sub-indoor units 11 do not receive the heating demand; and controls to turn on the outdoor unit 2 when any of the sub-indoor units 11 receives the heating demand.

In the above manner, when a sub-indoor unit 11 receives a heating demand, correspondingly, the indoor fan is closed and the electronic expansion valve 12 is opened, which is conducive to improving the efficiency of heating, and at the same time, the outdoor unit 2 is turned on to ensure the normal operation of the system; and when none of the sub-indoor units 11 receives a heating demand, the outdoor unit 2 is turned off to reduce the energy consumption of the system.

In a preferred implementation of the present invention, during hot water production in the normal operation mode, when the indoor ambient temperature T1 is not less than a first indoor temperature preset value, the heating energy demand is not sent; when the indoor ambient temperature T1 is in a specified temperature range, it is determined according to the indoor unit coil temperature T2 whether to send the heating energy demand; and when the indoor ambient temperature T1 is less than a second temperature preset value, the heating energy demand is sent once every specified time interval.

In the above manner, when the indoor ambient temperature T1 is not less than the first indoor temperature preset value, the indoor unit will not frost in a high probability, so the heating energy demand will not be sent, which is conducive to reducing the energy consumption of the system; when the indoor ambient temperature T1 is in the specified temperature range, in combination with the indoor unit coil temperature T2, it is determined whether to send the heating energy demand, which improves the control accuracy of sending the heating energy demand and the accuracy of intervention in frosting of the indoor unit 1, realizes preheating of the indoor unit 1 on demand, and saves the energy consumption of the system; and when the indoor ambient temperature T1 is less than the second temperature preset value, the indoor unit 1 has a high probability of frosting, so the heating energy demand is sent once every specified time interval, allowing intervention in the indoor unit 1 in time after frost formation so as to improve the defrosting effect.

Further, when the indoor ambient temperature T1 is in the specified temperature range, the step of determining according to the indoor unit coil temperature T2 whether to send the heating energy demand comprises:
when the indoor unit coil temperature T2 is lower than the indoor unit coil temperature preset value, sending the heating energy demand; and when the indoor unit coil temperature T2 is greater than the indoor unit coil temperature preset value, not sending the heating energy demand.

In the above manner, when the indoor unit coil temperature T2 is higher than the indoor unit coil temperature preset value, the temperature rise of the indoor unit 1 is quick, and the system will quickly break through the anti-cold air restriction and blow hot air when heating, so that the rapid heating can be carried out without sending a heating energy demand, which is conducive to reducing the energy consumption of the system; and when the indoor unit coil temperature T2 is lower than the indoor unit coil temperature preset value, the temperature rise of the indoor unit 1 is slow, and the heating energy demand is sent, which is conducive to improving the heating efficiency.

Even further, the control module 7 controls the electronic expansion valve 12 corresponding to the sub-indoor unit 11 that receives a heating demand to open to a specified opening degree and the corresponding indoor fan to close; and controls the electronic expansion valve 12 corresponding to the sub-indoor unit 11 that does not receive the heating demand to close and the corresponding indoor fan to close; and controls to turn off the outdoor unit 2 when all the sub-indoor units 11 do not receive the heating demand; and controls to turn on the outdoor unit 2 when any of the sub-indoor units 11 receives the heating demand.

When the indoor ambient temperature T1 is less than the second temperature preset value, the heating energy demand is sent once every specified time interval, and for the sub-indoor unit 11 that receives the heating energy demand, the control module 7 controls the electronic expansion valve 12 corresponding to the sub-indoor unit 11 to open to the specified opening degree and the corresponding indoor fan to close; controls to turn off the outdoor unit 2 when all the sub-indoor units 11 do not receive the heating demand; and controls to turns on the outdoor unit 2 when any of the sub-indoor units 11 receives the heating demand.

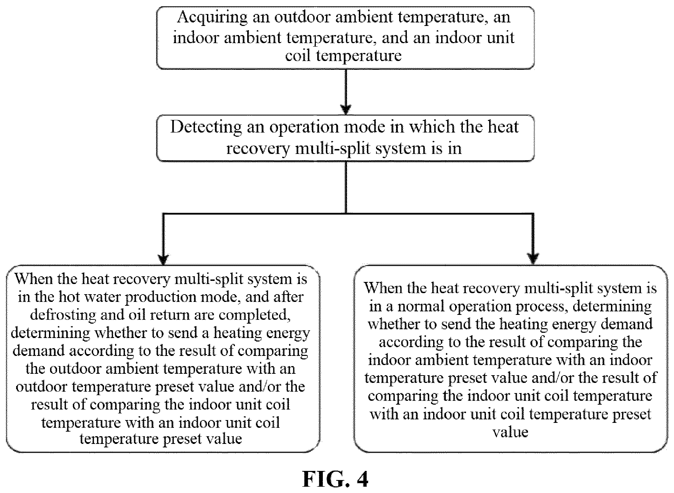

Referring to FIG. 4, corresponding to the heat recovery multi-split system of the present invention, the present invention provides an operation method for the above heat recovery multi-split system, comprising the steps of:
acquiring an indoor ambient temperature T1, an outdoor ambient temperature, and an indoor unit coil temperature T2;
detecting an operation mode in which the heat recovery multi-split system is in;
when the heat recovery multi-split system is in a hot water production mode, and after defrosting and oil return are completed, determining whether to send a heating energy demand according to the result of comparing the outdoor ambient temperature with an outdoor temperature preset value and/or the result of comparing the indoor unit coil temperature T2 with an indoor unit coil temperature preset value; and
when the heat recovery multi-split system is in a normal operation process and a hot water production demand is received, determining whether to send the heating energy demand according to the result of comparing the indoor ambient temperature T1 with an indoor temperature preset value and/or the result of comparing the indoor unit coil temperature T2 with an indoor unit coil temperature preset value.

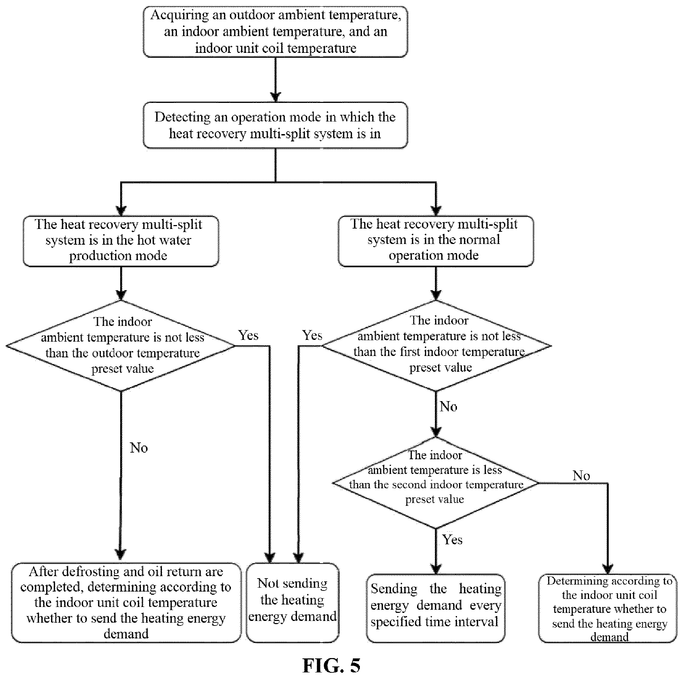

As shown in FIG. 5, in the preferred implementation of the present invention, when the outdoor ambient temperature is not less than the outdoor temperature preset value, the heating energy demand is not sent; and when the outdoor ambient temperature is less than the outdoor temperature preset value, it is determined according to the indoor unit coil temperature T2 whether to send the heating energy demand.

Further, when the outdoor ambient temperature is less than the outdoor temperature preset value, determining according to the indoor unit coil temperature T2 whether to send the heating energy demand further comprises the sub-steps of:
when the indoor unit coil temperature T2 is lower than the indoor unit coil temperature preset value, sending the heating energy demand; and when the indoor unit coil temperature T2 is greater than the indoor unit coil temperature preset value, not sending the heating energy demand.

Even further, it further comprises: opening the electronic expansion valve 12 corresponding to the sub-indoor unit 11 that receives a heating demand to a specified opening degree and closing the corresponding indoor fan; and closing the electronic expansion valve 12 corresponding to the sub-indoor unit 11 that does not receive the heating demand and closing the corresponding indoor fan; and turning off the outdoor unit when all the sub-indoor units 11 do not receive the heating demand; and controlling to turn on the outdoor unit when any of the sub-indoor units 11 receives the heating demand.

In a preferred implementation of the present invention, when the indoor ambient temperature T1 is not less than a first indoor temperature preset value, the heating energy demand is not sent; when the indoor ambient temperature T1 is in a specified temperature range, it is determined according to the indoor unit coil temperature T2 whether to send the heating energy demand; and when the indoor ambient temperature T1 is less than a second temperature preset value, the heating energy demand is sent once every specified time interval.

Further, when the indoor ambient temperature T1 is in the specified temperature range, determining according to the indoor unit coil temperature T2 whether to send the heating energy demand further comprises the sub-steps of:
when the indoor unit coil temperature T2 is lower than the indoor unit coil temperature preset value, sending the heating energy demand; and when the indoor unit coil temperature T2 is greater than the indoor unit coil temperature preset value, not sending the heating energy demand.

Even further, it further comprises: opening the electronic expansion valve 12 corresponding to the sub-indoor unit 11 that receives a heating demand to a specified opening degree and closing the corresponding indoor fan; and closing the electronic expansion valve 12 corresponding to the sub-indoor unit 11 that does not receive the heating demand and closing the corresponding indoor fan; and turning off the outdoor unit when all the sub-indoor units 11 do not receive the heating demand; and turning on the outdoor unit when any of the sub-indoor units 11 receives the heating demand.

The above only describes the preferred embodiments of the present invention and is not intended to limit the invention. Modifications, equivalent replacements and improvements can be made within the scope of the invention that is defined in the appended claims.

## Claims

1. A heat recovery multi-split system, comprising an indoor unit (1), an outdoor unit (2), and a hydraulic module (3), further comprising:
a temperature acquisition module (4) that acquires an indoor ambient temperature (T1), an outdoor ambient temperature, and an indoor unit coil temperature (T2);
a detection module (5) that detects an operation mode in which the heat recovery multi-split system is in, the operation mode comprising a hot water production mode and a normal operation mode; and
a determination module (6), wherein when the heat recovery multi-split system is in the hot water production mode, and after defrosting and oil return are completed, the determination module (6) determines whether to send a heating energy demand according to the result of comparing the outdoor ambient temperature with an outdoor temperature preset value and/or the result of comparing the indoor unit coil temperature (T2) with an indoor unit coil temperature preset value; and when the heat recovery multi-split system is in a normal operation process and a hot water production demand is received, the determination module (6) determines whether to send a heating energy demand according to the result of comparing the indoor ambient temperature (T1) with an indoor temperature preset value and/or the result of comparing the indoor unit coil temperature (T2) with an indoor unit coil temperature preset value.

2. The heat recovery multi-split system according to claim 1, wherein when the outdoor ambient temperature is not less than the outdoor temperature preset value, the heating energy demand is not sent; and when the outdoor ambient temperature is less than the outdoor temperature preset value, it is determined according to the indoor unit coil temperature (T2) whether to send the heating energy demand.

3. The heat recovery multi-split system according to claim 1 or 2, wherein when the indoor ambient temperature (T1) is not less than a first indoor temperature preset value, the heating energy demand is not sent; when the indoor ambient temperature (T1) is in a specified temperature range, it is determined according to the indoor unit coil temperature (T2) whether to send the heating energy demand; and when the indoor ambient temperature (T1) is less than a second temperature preset value, the heating energy demand is sent once every specified time interval.

4. The heat recovery multi-split system according to claim 2 or 3, wherein when the indoor unit coil temperature (T2) is lower than the indoor unit coil temperature preset value, the heating energy demand is sent; and when the indoor unit coil temperature (T2) is greater than the indoor unit coil temperature preset value, the heating energy demand is not sent.

5. The heat recovery multi-split system according to claim 2 or 3, wherein the indoor unit (1) comprises a plurality of sub-indoor units (11) arranged in parallel and indoor fans corresponding to the sub-indoor units, inlets of the sub-indoor units being separately connected in series with electronic expansion valves;
the heat recovery multi-split system further comprises a control module (7), wherein the control module (7) controls the electronic expansion valve corresponding to the sub-indoor unit (11) that receives a heating demand to open to a specified opening degree and the corresponding indoor fan to close; and controls the electronic expansion valve corresponding to the sub-indoor unit that does not receive the heating demand to close and the corresponding indoor fan to close; and
controls to turn off the outdoor unit (2) when all the sub-indoor units (11) do not receive the heating demand; and controls to turn on the outdoor unit (2) when any of the sub-indoor units (11) receives the heating demand.

6. An operation method for a heat recovery multi-split system, the heat recovery multi-split system comprising an indoor unit (1), an outdoor unit (2), and a hydraulic module (3), wherein the operation method for a heat recovery multi-split system comprises the steps of:
acquiring an indoor ambient temperature (T1), an outdoor ambient temperature, and an indoor unit coil temperature (T2);
detecting an operation mode in which the heat recovery multi-split system is in, the operation mode comprising a hot water production mode and a normal operation mode; and
when the heat recovery multi-split system is in the hot water production mode, and after defrosting and oil return are completed, determining whether to send a heating energy demand according to the result of comparing the outdoor ambient temperature with an outdoor temperature preset value and/or the result of comparing the indoor unit coil temperature (T2) with an indoor unit coil temperature preset value; and when the heat recovery multi-split system is in a normal operation process and a hot water production demand is received, determining whether to send a heating energy demand according to the result of comparing the indoor ambient temperature (T1) with an indoor temperature preset value and/or the result of comparing the indoor unit coil temperature (T2) with an indoor unit coil temperature preset value.

7. The operation method for a heat recovery multi-split system according to claim 6, wherein when the outdoor ambient temperature is not less than the outdoor temperature preset value, the heating energy demand is not sent; and when the outdoor ambient temperature is less than the outdoor temperature preset value, it is determined according to the indoor unit coil temperature (T2) whether to send the heating energy demand.

8. The operation method for a heat recovery multi-split system according to claim 6 or 7, wherein when the indoor ambient temperature (T1) is not less than a first indoor temperature preset value, the heating energy demand is not sent; when the indoor ambient temperature (T1) is in a specified temperature range, it is determined according to the indoor unit coil temperature (T2) whether to send the heating energy demand; and when the indoor ambient temperature (T1) is less than a second temperature preset value, the heating energy demand is sent once every specified time interval.

9. The operation method for a heat recovery multi-split system according to claim 7 or 8, wherein the step of determining whether to send the heating energy demand according to the indoor unit coil temperature (T2) comprises:
when the indoor unit coil temperature (T2) is lower than the indoor unit coil temperature preset value, sending the heating energy demand; and when the indoor unit coil temperature (T2) is greater than the indoor unit coil temperature preset value, not sending the heating energy demand.

10. The operation method for a heat recovery multi-split system according to claim 7 or 8, wherein the indoor unit (1) comprises a plurality of sub-indoor units (11) arranged in parallel and indoor fans corresponding to the sub-indoor units, inlets of the sub-indoor units being separately connected in series with electronic expansion valves;
the heat recovery multi-split system further comprises a control module (7), wherein the control module (7) controls the electronic expansion valve corresponding to the sub-indoor unit (11) that receives a heating demand to open to a specified opening degree and the corresponding indoor fan to close; and controls the electronic expansion valve corresponding to the sub-indoor unit (11) that does not receive the heating demand to close and the corresponding indoor fan to close; and
controls to turn off the outdoor unit (2) when all the sub-indoor units (11) do not receive the heating demand; and controls to turn on the outdoor unit (2) when any of the sub-indoor units (11) receives the heating demand.

## Patentansprüche

1. Multisplit-Klimaanlage mit Wärmerückgewinnung, umfassend eine Inneneinheit (1), eine Außeneinheit (2) und ein Hydraulikmodul (3), ferner umfassend:
ein Temperaturerfassungsmodul (4), das eine Innenraum-Umgebungstemperatur (T1), eine Außen-Umgebungstemperatur und eine Inneneinheit-Registertemperatur (T2) erfasst;
ein Erkennungsmodul (5), das einen Betriebsmodus erkennt, in dem sich die Multisplit-Klimaanlage mit Wärmerückgewinnung befindet, wobei der Betriebsmodus einen Warmwassererzeugungsmodus und einen Normalbetriebsmodus umfasst; und
ein Bestimmungsmodul (6), wobei, wenn sich die Multisplit-Klimaanlage mit Wärmerückgewinnung im Warmwassererzeugungsmodus befindet und nachdem das Abtauen und der Ölrücklauf abgeschlossen sind, das Bestimmungsmodul (6) bestimmt, ob eine Heizenergieanforderung gesendet werden soll, basierend auf dem Ergebnis des Vergleichens der Außen-Umgebungstemperatur mit einem Außentemperatur-Vorgabewert und/oder dem Ergebnis des Vergleichens der Inneneinheit-Registertemperatur (T2) mit einem Inneneinheit-Registertemperatur-Vorgabewert; und wenn sich die Multisplit-Klimaanlage mit Wärmerückgewinnung in einem Normalbetriebsprozess befindet und eine Warmwassererzeugungsanforderung erhalten wird, das Bestimmungsmodul (6) bestimmt, ob eine Heizenergieanforderung gesendet werden soll, basierend auf dem Ergebnis des Vergleichens der Innenraum-Umgebungstemperatur (T1) mit einem Innentemperatur-Vorgabewert und/oder dem Ergebnis des Vergleichens der Inneneinheit-Registertemperatur (T2) mit einem Inneneinheit-Registertemperatur-Vorgabewert.

2. Multisplit-Klimaanlage mit Wärmerückgewinnung nach Anspruch 1, wobei, wenn die Außen-Umgebungstemperatur nicht niedriger als der Außentemperatur-Vorgabewert ist, die Heizenergieanforderung nicht gesendet wird; und wenn die Außen-Umgebungstemperatur niedriger als der Außentemperatur-Vorgabewert ist, basierend auf der Inneneinheit-Registertemperatur (T2) bestimmt wird, ob die Heizenergieanforderung gesendet werden soll.

3. Multisplit-Klimaanlage mit Wärmerückgewinnung nach Anspruch 1 oder 2, wobei, wenn die Innenraum-Umgebungstemperatur (T1) nicht niedriger als ein erster Innentemperatur-Vorgabewert ist, die Heizenergieanforderung nicht gesendet wird; wenn die Innenraum-Umgebungstemperatur (T1) in einem spezifizierten Temperaturbereich liegt, basierend auf der Inneneinheit-Registertemperatur (T2) bestimmt wird, ob die Heizenergieanforderung gesendet werden soll; und wenn die Innenraum-Umgebungstemperatur (T1) niedriger als ein zweiter Temperatur-Vorgabewert ist, die Heizenergieanforderung einmal in jedem spezifizierten Zeitintervall gesendet wird.

4. Multisplit-Klimaanlage mit Wärmerückgewinnung nach Anspruch 2 oder 3, wobei, wenn die Inneneinheit-Registertemperatur (T2) niedriger als der Inneneinheit-Registertemperatur-Vorgabewert ist, die Heizenergieanforderung gesendet wird; und wenn die Inneneinheit-Registertemperatur (T2) höher als der Inneneinheit-Registertemperatur-Vorgabewert ist, die Heizenergieanforderung nicht gesendet wird.

5. Multisplit-Klimaanlage mit Wärmerückgewinnung nach Anspruch 2 oder 3, wobei die Inneneinheit (1) eine Vielzahl von parallel angeordneten Unter-Inneneinheiten (11) und den Unter-Inneneinheiten entsprechende Innenraumlüfter umfasst, wobei Einlässe der Unter-Inneneinheiten separat mit elektronischen Expansionsventilen in Reihe geschaltet sind;
die Multisplit-Klimaanlage mit Wärmerückgewinnung ferner ein Steuermodul (7) umfasst, wobei das Steuermodul (7) das elektronische Expansionsventil, das der Unter-Inneneinheit (11) entspricht, die eine Heizungsanforderung erhält, steuert, um es auf einen spezifizierten Öffnungsgrad zu öffnen, und den entsprechenden Innenraumlüfter steuert, um ihn zu schließen; und das elektronische Expansionsventil, das der Unter-Inneneinheit entspricht, die keine Heizungsanforderung erhält, steuert, um es zu schließen, und den entsprechenden Innenraumlüfter steuert, um ihn zu schließen; und
die Außeneinheit (2) steuert, um sie auszuschalten, wenn alle Unter-Inneneinheiten (11) keine Heizungsanforderung erhalten; und die Außeneinheit (2) steuert, um sie einzuschalten, wenn irgendeine der Unter-Inneneinheiten (11) die Heizungsanforderung erhält.

6. Betriebsverfahren für eine Multisplit-Klimaanlage mit Wärmerückgewinnung, wobei die Multisplit-Klimaanlage mit Wärmerückgewinnung eine Inneneinheit (1), eine Außeneinheit (2) und ein Hydraulikmodul (3) umfasst, wobei das Betriebsverfahren für eine Multisplit-Klimaanlage mit Wärmerückgewinnung die Schritte umfasst:
Erfassen einer Innenraum-Umgebungstemperatur (T1), einer Außen-Umgebungstemperatur und einer Inneneinheit-Registertemperatur (T2);
Erkennen eines Betriebsmodus, in dem sich die Multisplit-Klimaanlage mit Wärmerückgewinnung befindet, wobei der Betriebsmodus einen Warmwassererzeugungsmodus und einen Normalbetriebsmodus umfasst; und
wenn sich die Multisplit-Klimaanlage mit Wärmerückgewinnung im Warmwassererzeugungsmodus befindet und nachdem das Abtauen und der Ölrücklauf abgeschlossen sind, Bestimmen, ob eine Heizenergieanforderung gesendet werden soll, basierend auf dem Ergebnis des Vergleichens der Außen-Umgebungstemperatur mit einem Außentemperatur-Vorgabewert und/oder dem Ergebnis des Vergleichens der Inneneinheit-Registertemperatur (T2) mit einem Inneneinheit-Registertemperatur-Vorgabewert; und wenn sich die Multisplit-Klimaanlage mit Wärmerückgewinnung in einem Normalbetriebsprozess befindet und eine Warmwassererzeugungsanforderung erhalten wird, Bestimmen, ob eine Heizenergieanforderung gesendet werden soll, basierend auf dem Ergebnis des Vergleichens der Innenraum-Umgebungstemperatur (T1) mit einem Innentemperatur-Vorgabewert und/oder dem Ergebnis des Vergleichens der Inneneinheit-Registertemperatur (T2) mit einem Inneneinheit-Registertemperatur-Vorgabewert.

7. Betriebsverfahren für eine Multisplit-Klimaanlage mit Wärmerückgewinnung nach Anspruch 6, wobei, wenn die Außen-Umgebungstemperatur nicht niedriger als der Außentemperatur-Vorgabewert ist, die Heizenergieanforderung nicht gesendet wird; und wenn die Außen-Umgebungstemperatur niedriger als der Außentemperatur-Vorgabewert ist, basierend auf der Inneneinheit-Registertemperatur (T2) bestimmt wird, ob die Heizenergieanforderung gesendet werden soll.

8. Betriebsverfahren für eine Multisplit-Klimaanlage mit Wärmerückgewinnung nach Anspruch 6 oder 7, wobei, wenn die Innenraum-Umgebungstemperatur (T1) nicht niedriger als ein erster Innentemperatur-Vorgabewert ist, die Heizenergieanforderung nicht gesendet wird; wenn die Innenraum-Umgebungstemperatur (T1) in einem spezifizierten Temperaturbereich liegt, basierend auf der Inneneinheit-Registertemperatur (T2) bestimmt wird, ob die Heizenergieanforderung gesendet werden soll; und wenn die Innenraum-Umgebungstemperatur (T1) niedriger als ein zweiter Temperatur-Vorgabewert ist, die Heizenergieanforderung einmal in jedem spezifizierten Zeitintervall gesendet wird.

9. Betriebsverfahren für eine Multisplit-Klimaanlage mit Wärmerückgewinnung nach Anspruch 7 oder 8, wobei der Schritt des Bestimmens, ob die Heizenergieanforderung basierend auf der Inneneinheit-Registertemperatur (T2) gesendet werden soll, umfasst:
wenn die Inneneinheit-Registertemperatur (T2) niedriger als der Inneneinheit-Registertemperatur-Vorgabewert ist, Senden der Heizenergieanforderung; und wenn die Inneneinheit-Registertemperatur (T2) höher als der Inneneinheit-Registertemperatur-Vorgabewert ist, Nicht-Senden der Heizenergieanforderung.

10. Betriebsverfahren für eine Multisplit-Klimaanlage mit Wärmerückgewinnung nach Anspruch 7 oder 8, wobei die Inneneinheit (1) eine Vielzahl von parallel angeordneten Unter-Inneneinheiten (11) und den Unter-Inneneinheiten entsprechende Innenraumlüfter umfasst, wobei Einlässe der Unter-Inneneinheiten separat mit elektronischen Expansionsventilen in Reihe geschaltet sind;
die Multisplit-Klimaanlage mit Wärmerückgewinnung ferner ein Steuermodul (7) umfasst, wobei das Steuermodul (7) das elektronische Expansionsventil, das der Unter-Inneneinheit (11) entspricht, die eine Heizungsanforderung erhält, steuert, um es auf einen spezifizierten Öffnungsgrad zu öffnen, und den entsprechenden Innenraumlüfter steuert, um ihn zu schließen; und das elektronische Expansionsventil, das der Unter-Inneneinheit (11) entspricht, die keine Heizungsanforderung erhält, steuert, um es zu schließen, und den entsprechenden Innenraumlüfter steuert, um ihn zu schließen; und
die Außeneinheit (2) steuert, um sie auszuschalten, wenn alle Unter-Inneneinheiten (11) keine Heizungsanforderung erhalten; und die Außeneinheit (2) steuert, um sie einzuschalten, wenn irgendeine der Unter-Inneneinheiten (11) die Heizungsanforderung erhält.

## Revendications

1. Système à récupération de chaleur à divisions multiples, comprenant une unité intérieure (1), une unité extérieure (2) et un module hydraulique (3), comprenant en outre :
un module d'acquisition de température (4) qui acquiert une température ambiante intérieure (T1), une température ambiante extérieure et une température de batterie d'unité intérieure (T2) ;
un module de détection (5) qui détecte un mode de fonctionnement dans lequel se trouve le système à récupération de chaleur à divisions multiples, le mode de fonctionnement comprenant un mode de production d'eau chaude et un mode de fonctionnement normal ; et
un module de détermination (6), dans lequel, lorsque le système à récupération de chaleur à divisions multiples est en mode de production d'eau chaude, et après la finalisation du dégivrage et du retour d'huile, le module de détermination (6) détermine la nécessité d'envoyer une demande d'énergie de chauffage en fonction du résultat de la comparaison de la température ambiante extérieure avec une valeur prédéfinie de température extérieure et/ou du résultat de la comparaison de la température de la batterie d'unité intérieure (T2) avec une valeur prédéfinie de température de la batterie d'unité intérieure ; et lorsque le système à récupération de chaleur à divisions multiples est en fonctionnement normal et qu'une demande de production d'eau chaude est reçue, le module de détermination (6) détermine la nécessité d'envoyer une demande d'énergie de chauffage en fonction du résultat de la comparaison de la température ambiante intérieure (T1) avec une valeur prédéfinie de température intérieure et/ou du résultat de la comparaison de la température de la batterie d'unité intérieure (T2) avec une valeur prédéfinie de température de la batterie d'unité intérieure.

2. Système à récupération de chaleur à divisions multiples selon la revendication 1, dans lequel, lorsque la température ambiante extérieure n'est pas inférieure à la valeur prédéfinie de température extérieure, la demande d'énergie de chauffage n'est pas envoyée ; et lorsque la température ambiante extérieure est inférieure à la valeur prédéfinie de température extérieure, il est déterminé en fonction de la température de la batterie d'unité intérieure (T2) s'il faut envoyer la demande d'énergie de chauffage.

3. Système à récupération de chaleur à divisions multiples selon la revendication 1 ou 2, dans lequel, lorsque la température ambiante intérieure (T1) n'est pas inférieure à une première valeur prédéfinie de température intérieure, la demande d'énergie de chauffage n'est pas envoyée ; lorsque la température ambiante intérieure (T1) se situe dans une plage de température spécifiée, il est déterminé en fonction de la température de la batterie d'unité intérieure (T2) s'il faut envoyer la demande d'énergie de chauffage ; et lorsque la température ambiante intérieure (T1) est inférieure à une deuxième valeur prédéfinie de température intérieure, la demande d'énergie de chauffage est envoyée une fois par intervalle de temps spécifié.

4. Système à récupération de chaleur à divisions multiples selon la revendication 2 ou 3, dans lequel, lorsque la température de la batterie d'unité intérieure (T2) est inférieure à la valeur prédéfinie de température de température de batterie d'unité intérieure, la demande d'énergie de chauffage est envoyée ; et lorsque la température de la batterie d'unité intérieure (T2) est supérieure à la valeur prédéfinie de température de batterie d'unité intérieure, la demande d'énergie de chauffage n'est pas envoyée.

5. Système à récupération de chaleur à divisions multiples selon la revendication 2 ou 3, dans lequel l'unité intérieure (1) comprend une pluralité de sous-unités intérieures (11) disposées en parallèle et des ventilateurs intérieurs correspondant aux sous-unités intérieures, des entrées des sous-unités intérieures étant connectées séparément en série avec des vannes d'expansion électroniques ;
le système à récupération de chaleur à divisions multiples comprend en outre un module de commande (7), dans lequel le module de commande (7) commande l'ouverture de la vanne d'expansion électronique correspondant à la sous-unité intérieure (11) qui reçoit une demande de chauffage à un degré d'ouverture spécifié et la fermeture du ventilateur intérieur correspondant ; et commande la fermeture de la vanne d'expansion électronique correspondant à la sous-unité intérieure qui ne reçoit pas de demande de chauffage et la fermeture du ventilateur intérieur correspondant ; et
commande l'arrêt de l'unité extérieure (2) lorsque toutes les sous-unités intérieures (11) ne reçoivent pas la demande de chauffage ; et commande la mise en marche de l'unité extérieure (2) lorsque l'une quelconque des sous-unités intérieures (11) reçoit la demande de chauffage.

6. Procédé de fonctionnement pour un système à récupération de chaleur à divisions multiples, le système à récupération de chaleur à divisions multiples comprenant une unité intérieure (1), une unité extérieure (2) et un module hydraulique (3), le procédé de fonctionnement pour un système à récupération de chaleur à divisions multiples comprenant les étapes consistant en :
l'acquisition d'une température ambiante intérieure (T1), d'une température ambiante extérieure et une température de batterie d'unité intérieure (T2) ;
la détection d'un mode de fonctionnement dans lequel se trouve le système à récupération de chaleur à divisions multiples, le mode de fonctionnement comprenant un mode de production d'eau chaude et un mode de fonctionnement normal ; et
lorsque le système à récupération de chaleur à divisions multiples est en mode de production d'eau chaude, et après la finalisation du dégivrage et du retour d'huile, la détermination de la nécessité d'envoyer une demande d'énergie de chauffage en fonction du résultat de la comparaison de la température ambiante extérieure avec une valeur prédéfinie de température extérieure et/ou du résultat de la comparaison de la température de la batterie d'unité intérieure (T2) avec une valeur prédéfinie de température de la batterie d'unité intérieure ; et lorsque le système à récupération de chaleur à divisions multiples est en fonctionnement normal et qu'une demande de production d'eau chaude est reçue, la détermination de la nécessité d'envoyer une demande d'énergie de chauffage en fonction du résultat de la comparaison de la température ambiante intérieure (T1) avec une valeur prédéfinie de température intérieure et/ou du résultat de la comparaison de la température de la batterie d'unité intérieure (T2) avec une valeur prédéfinie de température de la batterie d'unité intérieure.

7. Procédé de fonctionnement pour un système à récupération de chaleur à divisions multiples selon la revendication 6, dans lequel, lorsque la température ambiante extérieure n'est pas inférieure à la valeur prédéfinie de température extérieure, la demande d'énergie de chauffage n'est pas envoyée ; et lorsque la température ambiante extérieure est inférieure à la valeur prédéfinie de température extérieure, il est déterminé en fonction de la température de la batterie d'unité intérieure (T2) s'il faut envoyer la demande d'énergie de chauffage.

8. Procédé de fonctionnement pour un système à récupération de chaleur à divisions multiples selon la revendication 6 ou 7, dans lequel, lorsque la température ambiante intérieure (T1) n'est pas inférieure à une première valeur prédéfinie de température intérieure, la demande d'énergie de chauffage n'est pas envoyée ; lorsque la température ambiante intérieure (T1) se situe dans une plage de température spécifiée, il est déterminé en fonction de la température de la batterie d'unité intérieure (T2) s'il faut envoyer la demande d'énergie de chauffage ; et lorsque la température ambiante intérieure (T1) est inférieure à une deuxième valeur prédéfinie de température intérieure, la demande d'énergie de chauffage est envoyée une fois par intervalle de temps spécifié.

9. Procédé de fonctionnement pour un système à récupération de chaleur à divisions multiples selon la revendication 7 ou 8, dans lequel l'étape de détermination de la nécessité d'envoyer la demande d'énergie de chauffage en fonction de la température de la batterie d'unité intérieure (T2) comprend :
lorsque la température de la batterie d'unité intérieure (T2) est inférieure à la valeur prédéfinie de température de température de batterie d'unité intérieure, l'envoi de la demande d'énergie de chauffage ; et lorsque la température de la batterie d'unité intérieure (T2) est supérieure à la valeur prédéfinie de température de batterie d'unité intérieure, le non-envoi de la demande d'énergie de chauffage.

10. Procédé de fonctionnement pour un système à récupération de chaleur à divisions multiples selon la revendication 7 ou 8, dans lequel l'unité intérieure (1) comprend une pluralité de sous-unités intérieures (11) disposées en parallèle et des ventilateurs intérieurs correspondant aux sous-unités intérieures, des entrées des sous-unités intérieures étant connectées séparément en série avec des vannes d'expansion électroniques ;
le système à récupération de chaleur à divisions multiples comprend en outre un module de commande (7), dans lequel le module de commande (7) commande l'ouverture de la vanne d'expansion électronique correspondant à la sous-unité intérieure (11) qui reçoit une demande de chauffage à un degré d'ouverture spécifié et la fermeture du ventilateur intérieur correspondant ; et commande la fermeture de la vanne d'expansion électronique correspondant à la sous-unité intérieure (11) qui ne reçoit pas de demande de chauffage et la fermeture du ventilateur intérieur correspondant ; et
commande l'arrêt de l'unité extérieure (2) lorsque toutes les sous-unités intérieures (11) ne reçoivent pas la demande de chauffage ; et commande la mise en marche de l'unité extérieure (2) lorsque l'une quelconque des sous-unités intérieures (11) reçoit la demande de chauffage.
